# EUROPÄISCHE PATENTSCHRIFT

(11) **EP 2 916 053 B1**
(45) Veröffentlichungstag und Bekanntmachung des Hinweises auf die Patenterteilung: **18.07.2018**
(21) Anmeldenummer: 15000586.6
(22) Anmeldetag: 02.03.2015
(51) Int. Cl.: F16K 31/02, F16K 1/34, F03G 7/06

(54) **Einmalig betätigbare Ventilanordnung für eine Raumfahrtkomponente und Raumfahrtkomponente**
Valve assembly for a spaceflight component which can be actuated once and spaceflight component
Système de vanne à actionnement unique pour un composant aérospatial et composant aérospatial

(30) Priorität: 06.03.2014 DE 102014002972
(43) Veröffentlichungstag der Anmeldung: 09.09.2015
(73) Patentinhaber: ArianeGroup GmbH, 82024 Taufkirchen (DE)
(72) Erfinder: Kraus, Stephan, D-74229 Oedheim (DE); Maier, Thomas, D-74348 Lauffen (DE); Wolf, Markus, D-68163 Mannheim (DE); Schulte, Georg, D-74196 Neuenstadt (DE)
(74) Vertreter: Schicker, Silvia

(56) Entgegenhaltungen:
- DE-A1-102011 054 458
- DE-U1-202012 104 460
- JP-A- 2009 092 130
- US-A- 3 974 844
- US-A- 4 973 024
- US-A1- 2013 167 377

## Beschreibung

Die Erfindung betrifft eine einmalig betätigbare Ventilanordnung für eine Raumfahrtkomponente gemäß dem Oberbegriff des Anspruchs 1. Die Erfindung betrifft ferner eine Raumfahrtkomponente.

Ventile kommen allgemein dort zum Einsatz, wo beispielsweise eine Rohrleitung für flüssige oder gasförmige Medien geöffnet oder geschlossen werden muss. Je nach Anwendung können die Ventile zur mehrfachen oder auch nur zur einfachen Betätigung vorgesehen sein, wobei letzteres z.B. in Antriebssystemen für Raumfahranwendungen der Fall ist.

Ventile für orbitale Antriebssysteme werden häufig pyrotechnisch betätigt. Während die Lebensdauer von Satelliten immer größer wird und bereits mehr als 15 Jahre betragen kann, ist die Lebensdauer eines pyrotechnischen Aktuators auf wenige Jahre begrenzt. Wird ein pyrotechnisches Ventil zu Beginn einer Mission betätigt, ist dies unproblematisch. Soll jedoch gegen Ende der vorgesehenen Lebensdauer eines Satelliten, zum Beispiel zum Entlasten von Behältnissen, ein Ventil betätigt werden, so muss die Aktuation des Ventils auf andere Art erfolgen, da die Funktion der pyrotechnischen Komponenten nicht sicher gewährleistet werden kann.

Ein anderer Nachteil, insbesondere von pyrotechnischen Aktuatoren, besteht darin, dass Einwegventile häufig sehr schnell betätigt werden und dadurch hydraulische und/oder strukturelle Schocklasten hervorrufen können.

Allgemein werden an die Zuverlässigkeit der Ansteuerung von Ventilen bei Raumfahrtanwendungen hohe Anforderungen gestellt, da eine Fehlfunktion einen großen Schaden oder sogar den Verlust des Antriebssystems verursachen kann.

Aus der US 2013/0167377 A1 ist eine Ventilanordnung für eine Raumfahrtkomponente, zur einmaligen Betätigung bekannt, die einen Einlass und einen Auslass sowie einen durch ein Heizelement aktuierbaren Aktuator umfasst. In einem aktuierten Zustand des Aktuators ist ein Strömungsdurchgang zwischen dem Einlass und dem Auslass ermöglicht (Normally-Closed-Ventilanordnung). Der Aktuator ist ein Formgedächtnisaktuator, der im martensitischen Zustand entlang einer Längsachse des Aktuators gestreckt und in die Ventilanordnung integriert ist. Durch eine Aktivierung des Heizelements erfährt er bei Erreichen einer vorgegebenen Transformationstemperatur eine Längenänderung, durch die ein Ventilkolben allmählich von dem Dichtsitz, der an dem Einlass oder dem Auslass ausgebildet ist, lösbar ist.

Die US 3 974 844 A offenbart eine reversibel betätigbare Normally-Open-Ventilanordnung für Haushaltsanordnungen mit einem Einlass und einem Auslass sowie einem durch ein Heizelement aktuierbaren Aktuator. Der Aktuator ist ein Einwegeffekt-Formgedächtnisaktuator, der in die Ventilanordnung integriert ist, und der durch eine Aktivierung des Heizelements bei Erreichen einer vorgegebenen Transformationstemperatur eine Längenänderung erfährt, durch die er allmählich gegen einen Dichtsitz pressbar und von diesem lösbar ist.

Die US 4 973 024 A offenbart eine weitere reversibel betätigbare Normally-Closed-Ventilanordnung, die einen Einlass und einen Auslass sowie einen durch ein Heizelement aktuierbaren Aktuator umfasst.

Die DE 20 2012 104 460 U1 offenbart eine reversibel betätigbare Normally-Open-Ventilanordnung mit einem Einlass und einen Auslass sowie einen durch ein Heizelement aktuierbaren Aktuator, welches einem Rückstelleelement entgegen wirkt.

Die DE 10 2011 054 458 A1 offenbart eine reversibel betätigbare Normally-Open-Ventilanordnung für Hochvoltbatterie-Anwendungen mit einem Einlass und einem Auslass sowie einen durch ein Heizelement aktuierbaren Aktuator.

Die JP 2009 092130 A offenbart eine weitere Ventilanordnung mit einem Einlass und einem Auslass sowie einen durch ein Heizelement aktuierbaren Aktuator.

Es ist Aufgabe der vorliegenden Erfindung eine baulich und/oder funktional zuverlässige Ventilanordnung zum Schließen eines Ventils sowie eine entsprechende Raumfahrtkomponente für Raumfahrtanwendungen anzugeben.

Diese Aufgaben werden durch eine Ventilanordnung gemäß den Merkmalen des Anspruchs 1 und eine Raumfahrtkomponente gemäß den Merkmalen des Anspruchs 12 gelöst. Vorteilhafte Ausgestaltungen ergeben sich aus den abhängigen Ansprüchen.

Es wird eine Ventilanordnung, insbesondere für eine Raumfahrtkomponente, zur einmaligen Betätigung vorgeschlagen, die einen Einlass und einen Auslass sowie einen durch ein Heizelement aktuierbaren Aktuator umfasst. In einem nicht aktuierten Zustand des Aktuators ist ein Strömungsdurchgang zwischen dem Einlass und dem Auslass ermöglicht. Dies entspricht einer sog. Normally-Open (NO)-Konfiguration. Der Aktuator ist ein Einwegeffekt-Formgedächtnisaktuator, der im martensitischen Zustand entlang einer Längsachse des Aktuators gestaucht und in die Ventilanordnung integriert ist. Der Einwegeffekt-Formgedächtnisaktuator erfährt durch eine Aktivierung des Heizelements bei Erreichen einer vorgegebenen Transformationstemperatur eine Längenänderung, durch die er allmählich gegen einen Dichtsitz gepresst wird, der an dem Einlass oder dem Auslass ausgebildet ist. Auf einer Stirnseite des Aktuators, die dem Dichtsitz zugewandt ist, ist ein Dichtkolben aus einem duktilen Material angeordnet. Der Dichtsitz besteht aus einem im Vergleich zu dem Dichtkolben härteren Material.

Die Erfindung schafft eine Ventilanordnung, welche unabhängig von der Lebensdauer einer Raumfahrtkomponente, auch gegen deren Ende, zum Einsatz kommen kann. Dabei ist prinzipbedingt eine hohe Zuverlässigkeit gegeben. Zum Schließen des vor der Aktuierung geöffneten Ventils wird das Ventil elektrisch beheizt. Beim Erreichen der Transformationstemperatur dehnt sich der Aktuator aus, bis die Ursprungslänge vor der Stauchung erreicht wird. Dabei werden derart hohe Kräfte frei, dass durch das Pressen des Einwegeffekt-Formgedächtnisaktuators gegen den Dichtsitz eine hohe Dichtwirkung erreicht wird. Es ist sicher gestellt, dass mit der Ausdehnung des Einwegeffekt-Formgedächtnisaktuators und den dabei freiwerdenden hohen Kräften beim Anpressen an den harten Dichtsitz eine plastische Deformation des duktilen Dichtkolbens erfolgt, und die erwünschte hohe Dichtwirkung erreicht wird. Beim Erkalten des Aktuators bleibt dann dessen Länge und Kraft auf dem Dichtsitz erhalten, wodurch das Ventil dauerhaft geschlossen bleibt.

Das der Ventilanordnung zugrunde liegende Prinzip unterliegt keinerlei Begrenzung der Lebensdauer. Insbesondere resultiert dies daraus, dass die Ventilanordnung keinerlei gespeicherte, chemische Energie nutzt. Ein weiterer Vorteil besteht darin, dass die Ventilanordnung langsam betätigt werden kann. Hierdurch können hydraulische Schocklasten (sog. Wasserhammer oder englisch: water hammer) vermieden werden. Ebenso treten dadurch keine strukturellen Schocklasten durch die Auslösung von Explosivladungen, wie in einem pyrotechnischen Ventil, auf.

Gemäß einer zweckmäßigen Ausgestaltung liegt die Transformationstemperatur des Materials des Aktuators zwischen 80°C und 100°C. Allgemein hängt die Transformationstemperatur vom Material des Einwegeffekt-Formgedächtnisaktuators ab. Beispielsweise kann eine Nickel-Titan-Legierung zum Einsatz kommen, die auch unter dem Namen Nitinol bekannt ist.

Unter Berücksichtigung der Langzeitkompatibilität zu den zu fördernden Medien können z.B. PTFE, Aluminiumlegierungen oder goldbeschichteter austenitischer Chrom-Nickelstahl Verwendung finden. Es ist weiterhin zweckmäßig, wenn der Dichtkolben kegelstumpfförmig ausgebildet ist. Durch das Material und die Gestalt des Dichtkolbens kann die Dichtwirkung in gewünschter Weise positiv beeinflusst werden.

Es ist weiterhin zweckmäßig, wenn der Dichtsitz eine zu der Form des Dichtkolbens korrespondierende kegelstumpfförmige Form aufweist.

Gemäß einer weiteren zweckmäßigen Ausgestaltung ist ein Innenraum des Gehäuses durch ein elastisches Trennelement in einen Arbeitsraum und einen Freiraum unterteilt. Der Einlass und der Auslass münden zweckmäßiger Weise in den Arbeitsraum, wobei, bezogen auf die Menge des longitudinal ausgebildeten Aktuators, ein erster Längenabschnitt des Aktuators in dem Arbeitsraum angeordnet ist. Es ist weiterhin vorgesehen, dass, bezogen auf die Länge des longitudinal ausgebildeten Aktuators, ein zweiter Längenabschnitt in dem Freiraum angeordnet ist, der größer oder wesentlich größer als der erste Längenabschnitt ist. Hierdurch kann eine optionale Medientrennung erfolgen. Dies ist beispielsweise dann zweckmäßig, wenn das Material des Formgedächtnisaktuators und das zu schaltende Medium (z.B. ein Gas oder ein Fluid), chemisch nicht kompatibel sind.

Das Trennelement kann ein Metallfaltenbalg oder eine Membran sein. Grundsätzlich wird das Material des Trennelements derart gewählt, dass eine Kompatibilität zu dem zu schaltenden Medium gegeben ist. Als Material kann z.B. eine Titan-oder eine FeNiCr-Legierung eingesetzt werden.

In einer weiteren Ausgestaltung weist der Aktuator eine sich in Richtung der Längsachse erstreckende Ausnehmung auf, in deren Inneren das Heizelement angeordnet ist. Die Ausnehmung kann beispielsweise als Bohrung ausgebildet sein und im Wesentlichen nahezu vollständig durch den Aktuator hindurch gehen.

Um das Abschalten des Heizelements sicher zu stellen, ist es zweckmäßig, wenn das Heizelement über eine Thermosicherung abgesichert ist. Beim Überschreiten der Umwandlungstemperatur kann die Thermosicherung auslösen und so den Stromkreis zum Heizelement trennen. Dadurch kann ein Überhitzen des zu schaltenden Mediums verhindert werden.

Gemäß einer weiteren Ausgestaltung stimmt die Längsachse des Aktuators mit einer Längsachse des Einlasses oder des Auslasses überein. Beispielsweise können der Einlass und der Auslass an unterschiedlichen Seiten eines Gehäuses der Ventilanordnung angeordnet sein. Beispielsweise kann der Auslass am Boden des Gehäuses angeordnet sein, während der Einlass an einer der Seitenwände des Gehäuses der Ventilanordnung vorgesehen ist. Dies ermöglicht nicht nur einen einfachen konstruktiven Aufbau, sondern auch die oben erwähnte Medientrennung mit Hilfe des Trennelements. Es ist in diesem Zusammenhang zweckmäßig, wenn dann der Einlass in der Nähe des Bodens angeordnet ist, damit der Formgedächtnisaktuator möglichst wenig mit dem zu schaltenden Medium in Kontakt steht, d.h. der erste Längenabschnitt möglichst kurz gehalten werden kann.

Es wird ferner eine Raumfahrtkomponente für eine Raumfahrtanwendung vorgeschlagen, welche zumindest eine Ventilanordnung der oben beschriebenen Art aufweist. Die Raumfahrtkomponente, z.B. ein Satellit, eine Antriebskomponente oder dergleichen, weist die gleichen Vorteile auf, wie diese vorstehend in Verbindung mit der erfindungsgemäßen Ventilanordnung beschrieben wurden.

Die Erfindung wird nachfolgend näher anhand eines Ausführungsbeispiels in der Zeichnung erläutert. Es zeigen:
- Fig. 1: eine schematische Querschnittsdarstellung einer erfindungsgemäßen Ventilanordnung vor der Aktuierung, und
- Fig. 2: eine schematische Querschnittsdarstellung der erfindungsgemäßen Ventilanordnung aus Fig. 1 nach deren Aktuierung.

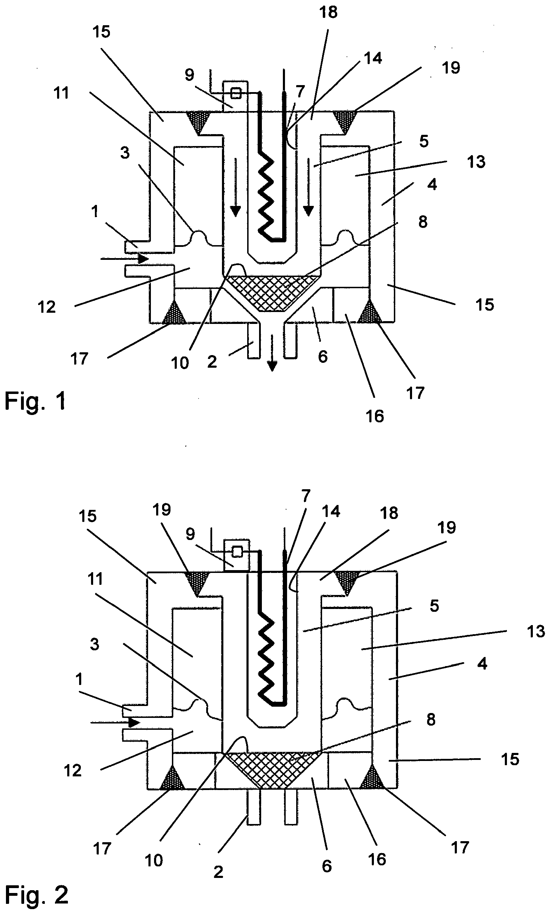

Fig. 1 zeigt eine schematische Querschnittsdarstellung einer erfindungsgemäßen Ventilanordnung. Die Ventilanordnung ist zur einmaligen Betätigung vorgesehen und ist in einem nicht aktuierten Zustand, der in Fig. 1 dargestellt ist, geöffnet. Die Ventilanordnung stellt damit eine sog. Normally-Open (NO)-Ventilanordnung dar.

Die Ventilanordnung umfasst ein Gehäuse 4. Das Gehäuse 4 ist lediglich beispielhaft mehrteilig ausgebaut und besteht aus Seitenwänden 15 sowie einem Boden 16. Das die Seitenwände 15 umfassende Gehäuseteil kann einstückig, z.B. zylindrisch, ausgebildet sein. Der Boden 16 und die Seitenwände 15 sind über eine umlaufende Schweißnaht oder mehrere Schweißnähte 17 fluiddicht miteinander verbunden. Von der Oberseite her ragt ein als Einwegeffekt-Formgedächtnisaktuator ausgebildeter Aktuator 5 in das Gehäuseinnere 11 des Gehäuses 4. Der im Wesentlichen longitudinal ausgebildete Aktuator 5 weist einen Flansch 18 auf, mit dem er sich an der Oberseite an den Seitenwänden 15 abstützt bzw. an diesen aufliegt. Über Schweißnähte 19 ist eine fluiddichte Verbindung zwischen dem Flansch 18 bzw. dem Aktuator 5 und den Seitenwänden 15 hergestellt.

Das Gehäuse 4 weist beispielhaft an der linken Seitenwand 15 einen Einlass 1 und an dem Boden 16 einen Auslass 6 auf. Eine Längsachse des Auslasses 2 (nicht dargestellt) stimmt mit einer Längsachse des Aktuators 5 (ebenfalls nicht dargestellt) überein. An einer dem Auslass 2 zugewandten Stirnseite 10 ist der Aktuator 5 mit einem Dichtkolben 8 aus duktilen Material versehen. Unter Berücksichtigung der Langzeitkompatibilität zu den zu fördernden Medien können als duktiles Material z.B. PTFE, Aluminiumlegierungen oder goldbeschichteter austenitischer Chrom-Nickelstahl Verwendung finden. Der Dichtkolben 8 weist eine Kegelstumpfform auf, wobei sich der Kegelstumpf in Richtung des Auslasses 2 verjüngt. Der an dem Auslass 2 gebildete Dichtsitz 6 weist eine dazu korrespondierende inverse, kegelstumpfförmige Gestalt auf, d.h. der Auslass 2 erweitert sich in Richtung des Gehäuseinneren. Der Dichtsitz 6 des Auslasses 2 ist aus einem harten Material gebildet. Hierzu kann beispielsweise eine Titanlegierung / FeNiCr-Legierung zum Einsatz kommen.

Der Aktuator 5 ist im Inneren mit einer longitudinalen Ausnehmung 14, z.B. einer Bohrung, versehen. In der Ausnehmung 14 ist ein elektrisches Heizelement 7 angeordnet, das sich nahezu über die gesamte Länge des Aktuators 5 erstreckt. Das Heizelement 7 ist über eine optionale Thermosicherung 9 mit einer nicht dargestellten Strom- bzw. Energiequelle verbunden.

Der Innenraum 11 des Gehäuses ist durch ein elastisches Trennelement 3, beispielsweise einen Metallfalkenbalg oder eine Membran, in einen Arbeitsraum 12 und einen Freiraum 13 unterteilt. Dabei kommen der Einlass 1 und der Auslass 2 derart in dem Gehäuse 4 zum Liegen, dass diese in den Arbeitsraum 12 münden.

Bezogen auf die Länge des longitudinal ausgebildeten Aktuators 5 ist ein erster, kurzer Längenabschnitt des Aktuators in dem Arbeitsraum 12 angeordnet. Ein zweiter Längenabschnitt, der größer oder wesentlich größer als der erste, kurze Längenabschnitt ist, ist demgegenüber in dem Freiraum 13 angeordnet. Es ist offensichtlich, dass der Freiraum 13 frei von dem zu schaltenden Medium, z.B. einem Gas oder einem Fluid, bleibt. Das Vorsehen des elastischen Trennelements ist vorteilhaft, wenn das Material des Aktuators 5 nicht kompatibel zu dem zu schaltenden Medium ist. Gegebenenfalls kann das Trennelement 3 derart an den Aktuator 5 grenzen, dass nur der Dichtkolben 8 in dem Arbeitsraum 12 liegt.

Der Aktuator 5 ist ein Einwegeffekt-Formgedächtnisaktuator mit martensitischaustenitischen Transformationseigenschaften. Der Aktuator 5 wird im martensitischen Zustand gestaucht und in der in Fig. 1 gezeigten Weise in die Ventilanordnung integriert. Die Transformationstemperatur liegt beispielsweise aufgrund des für den Aktuator 5 gewählten Materials, z.B. NiTi, eine Nickel-Titan-Legierung, in einem Bereich zwischen 80°C und 100°C. In diesem Temperaturbereich wird eine Überhitzung des zu schaltenden Mediums zuverlässig verhindert.

Zum Schließen des Ventils wird das Heizelement 7 durch Beaufschlagen mit Strom aktiviert. Beim Erreichen der vom Material bzw. der Materialzusammensetzung des Aktuators abhängigen Transformationstemperatur dehnt sich der Aktuator 5 aus bis die Ursprungslänge vor der Stauchung erreicht wird. Bei der Dehnung werden hohe Kräfte frei, die den aus duktilem Material gebildeten Dichtkolben 8 beim Auftreffen auf den harten Dichtsitz 6 plastisch deformieren. Dadurch wird eine gute Anlage des Dichtkolbens 8 an den Dichtsitz 6 erreicht, woraus eine hohe Dichtwirkung resultiert.

Beim Überschreiten der Transformationstemperatur löst die optional vorgesehene Thermosicherung 9 aus und trennt so den Stromkreis zum Heizelement 7. Dadurch wird eine Überhitzung des zu schaltenden Mediums, das nun nicht mehr aus dem Arbeitsraum 12 im Inneren der Ventilanordnung ausströmen kann, verhindert.

Beim Erkalten des Aktuators 5 bleibt dessen Länge und Kraft auf den Dichtsitz 6 erhalten. Dies hat zur Folge, dass das Ventil 2 dauerhaft geschlossen bleibt.

Fig. 2 zeigt den Zustand der Ventilanordnung nach der Aktuierung, wobei der Dichtkolben 8 plastisch deformiert an dem Dichtsitz 6 anliegt. Ebenso gut ist ersichtlich, dass durch die Längenänderung des Aktuators 5 das Trennelement 3 der longitudinalen Bewegung des Aktuators 5 in Richtung des Auslasses 2 folgt und den Arbeitsraum geringfügig verkleinert.

Der Vorteil der bestehenden Ventilanordnung besteht darin, dass keine Begrenzung der Lebensdauer besteht, da für die Aktuierung keine gespeicherte chemische Energie verwendet werden braucht.

Die Betätigung des Ventils erfolgt langsam entsprechend der Längenänderung des Aktuators beim Erreichen der Transformationstemperatur. Dadurch können hydraulische Schocklasten verhindert werden. Ebenso treten keine strukturellen Schocklasten auf, wie diese beispielsweise bei der Auslösung von Explosivladungen in einem pyrotechnischen Ventil auftreten.

Der konstruktive Aufbau der Ventilanordnung ist einfach, so dass dieses auch kostengünstig bereit gestellt werden kann.

### BEZUGSZEICHENLISTE

- 1: Einlass
- 2: Auslass
- 3: Trennelement
- 4: Gehäuse
- 5: Einwegeffekt-Formgedächtnisaktuator
- 6: Dichtsitz
- 7: Heizelement
- 8: Dichtkolben
- 9: Thermosicherung
- 10: Stirnseite
- 11: Innenraum
- 12: Arbeitsraum
- 13: Freiraum
- 14: Ausnehmung
- 15: Seitenwand
- 16: Boden
- 17: formschlüssige Verbindung, z.B. Schweißnaht
- 18: Flansch
- 19: formschlüssige Verbindung, z.B. Schweißnaht

## Patentansprüche

1. Ventilanordnung für eine Raumfahrtkomponente zur einmaligen Betätigung, umfassend einen Einlass (1) und einen Auslass (2) sowie einen durch ein Heizelement (7) aktuierbaren Aktuator (5), wobei der Aktuator (5) ein Einwegeffekt-Formgedächtnisaktuator ist, der in die Ventilanordnung integriert ist und der durch eine Aktivierung des Heizelements (7) bei Erreichen einer vorgegebenen Transformationstemperatur eine Längenänderung erfährt,
**dadurch gekennzeichnet, dass**
- in einem nicht aktuierten Zustand des Aktuators (5) ein Strömungsdurchgang zwischen dem Einlass (1) und dem Auslass (2) ermöglicht ist;
- der Aktuator (5) im martensitischen Zustand entlang einer Längsachse des Aktuators gestaucht ist;
- der Aktuator (5) durch die Aktivierung des Heizelements (7) eine Längenänderung erfährt, durch die er allmählich gegen einen Dichtsitz (6) gepresst wird, der an dem Einlass (1) oder dem Auslass (2) ausgebildet ist;
- auf einer Stirnseite (10) des Aktuators (5), die dem Dichtsitz (6) zugewandt ist, ein Dichtkolben (8) aus einem duktilen Material angeordnet ist; und
- der Dichtsitz (6) aus einem im Vergleich zu dem Dichtkolben (8) härteren Material besteht.

2. Ventilanordnung nach Anspruch 1, bei der die Transformationstemperatur des Materials des Aktuators (5) zwischen 80°C und 100°C liegt.

3. Ventilanordnung nach einem der vorhergehenden Ansprüche, bei der der Dichtkolben (8) kegelstumpfförmig ausgebildet ist.

4. Ventilanordnung nach einem der vorhergehenden Ansprüche, bei der der Dichtsitz (6) eine zu der Form des Dichtkolbens (8) korrespondierende kegelstumpfförmige Form aufweist.

5. Ventilanordnung nach einem der vorhergehenden Ansprüche, bei der ein Innenraum (11) des Gehäuses (4) durch ein elastisches Trennelement (3) in einen Arbeitsraum (12) und einen Freiraum (13) unterteilt ist.

6. Ventilanordnung nach Anspruch 5, bei der der Einlass (1) und der Auslass (2) in den Arbeitsraum (12) münden, wobei bezogen auf die Länge des longitudinal ausgebildeten Aktuators (5) ein erster Längenabschnitt des Aktuators (5) in dem Arbeitsraum (12) angeordnet ist.

7. Ventilanordnung nach Anspruch 5 oder 6, bei der, bezogen auf die Länge des longitudinal ausgebildeten Aktuators (5), ein zweiter Längenabschnitt in dem Freiraum (13) angeordnet ist, der größer oder wesentlich größer als der erste Längenabschnitt ist.

8. Ventilanordnung nach einem der Ansprüche 5 bis 7, bei der das Trennelement (3) ein Metallfaltenbalg oder eine Membran ist.

9. Ventilanordnung nach einem der vorhergehenden Ansprüche, bei der der Aktuator (5) eine sich in Richtung der Längsachse erstreckende Ausnehmung aufweist, in deren Innerem das Heizelement (7) angeordnet ist.

10. Ventilanordnung nach einem der vorhergehenden Ansprüche, bei der das Heizelement (7) über eine Thermosicherung abgesichert ist.

11. Ventilanordnung nach einem der vorhergehenden Ansprüche, bei der die Längsachse des Aktuators (5) mit einer Längsachse des Einlasses oder des Auslasses übereinstimmt.

12. Raumfahrtkomponente für eine Raumfahrtanwendung, umfassend zumindest eine Ventilanordnung gemäß einem der vorhergehenden Ansprüche.

## Claims

1. Valve arrangement for an aerospace component for one-time actuation, comprising an inlet (1) and an outlet (2) as well as an actuator (5) actuatable by a heating element (7), wherein the actuator (5) is a single-use effect shape memory actuator which is integrated into the valve arrangement, and which undergoes a change in length as a result of an activation of the heating element (7) when a predetermined transformation temperature is reached,
**characterized in that**
- in a non-actuated state of the actuator (5), flow passageway is enabled between the inlet (1) and the outlet (2);
- the actuator (5) in the martensitic state is compressed along a longitudinal axis of the actuator;
- the actuator (5) as a result of the activation of the heating element (7) undergoes a change in length, whereby it is gradually pressed against a seal seat (6) arranged at the inlet (1) or the outlet (2);
- a sealing piston (8) made of a ductile material is arranged on a front side (10) of the actuator (5) which faces toward the seal seat (6); and
- the seal seat (6) is made of a harder material compared to a material of the sealing piston (8).

2. Valve arrangement according to claim 1, wherein the transformation temperature of the material of the actuator (5) is between 80° C and 100° C.

3. Valve arrangement according to any one of the preceding claims, wherein the sealing piston (8) has a truncated cone shape.

4. Valve arrangement according to any one of the preceding claims, wherein the seal seat (6) has a truncated-cone shape corresponding to the shape of the seating piston (8).

5. Valve arrangement according to any one of the preceding claims, wherein an interior space (11) of the housing (4) is subdivided by an elastic partition element (3) into a working space (12) and a free space (13).

6. Valve arrangement according to claim 5, wherein the inlet (1) and the outlet (2) open into the working space (12), wherein, with respect to the length of the longitudinal actuator (5), a first longitudinal segment of the actuator (5) is arranged in the working space (12).

7. Valve arrangement according to claim 5 or 6, wherein, with respect to the length of the longitudinal actuator (5), a second longitudinal segment is arranged in the free space (13) that is larger or substantially larger than the first longitudinal segment.

8. Valve arrangement according to any one of claims 5 to 7, wherein the partition element (3) is a metal bellows or a diaphragm.

9. Valve arrangement according to any one of the preceding claims, wherein the actuator (5) has a recess extending in the direction of the longitudinal axis in whose interior the heating element (7) is arranged.

10. Valve arrangement according to any one of the preceding claims, wherein the heating element (7) is secured by a thermal fuse.

11. Valve arrangement according to any one of the preceding claims, wherein the longitudinal axis of the actuator (5) corresponds to a longitudinal axis of the inlet or of the outlet.

12. Aerospace component for an aerospace application, comprising at least one valve arrangement according to any one of the preceding claims.

## Revendications

1. Système de soupape à actionnement unique pour un composant aérospatial, comprenant une entrée (1) et une sortie (2) ainsi qu'un actionneur (5) actionnable par élément chauffant (7), l'actionneur (5) consistant en un actionneur à mémoire de forme simple sens qui est intégré dans le système de soupape et subit une modification de longueur lorsqu'est atteinte une température de transformation prédéfinie suite à l'actionnement dudit élément chauffant (7), **caractérisé en ce que**
- à l'état non actionné de l'actionneur (5), un flux peut s'écouler entre l'entrée (1) et la sortie (2)
- l'actionneur (5) est, à l'état martensitique, comprimé le long d'un axe longitudinal de l'actionneur,
- l'actionneur (5) subit une modification de longueur du fait de l'actionnement de l'élément chauffant (7), par laquelle l'actionneur est plaqué progressivement contre un siège étanche (6) formé à l'entrée (1) ou à la sortie (2),
- un piston étanche (8) réalisé à partir d'un matériau ductile est disposé sur une face frontale (10) de l'actionneur (5) qui est tournée vers le siège étanche (8), et
- le siège étanche (6) est réalisé à partir d'un matériau plus dur par rapport au piston étanche (8).

2. Système de soupape selon la revendication 1, dans le cadre duquel la température de transformation du matériau composant l'actionneur (5) est comprise entre 80 et 100°C.

3. Système de soupape selon l'une des revendications précédentes, dans le cadre duquel le piston étanche (8) est réalisé en forme de tronc de cône.

4. Système de soupape selon l'une des revendications précédentes, dans le cadre duquel le siège étanche (6) présente une forme correspondant à la forme du piston étanche (8).

5. Système de soupape selon l'une des revendications précédentes, dans le cadre duquel un espace intérieur (11) du boîtier (4) est divisé par un élément de séparation élastique en un espace de travail (12) et un espace libre (13).

6. Système de soupape selon la revendication 5, dans le cadre duquel l'entrée (1) et la sortie (2) débouchent dans l'espace de travail (12), un premier tronçon longitudinal de l'actionneur (5), rapporté à la longueur de l'actionneur (5) réalisé de manière longitudinale, étant disposé à l'intérieur de l'espace de travail (12).

7. Système de soupape selon la revendication 5 ou 6, dans le cadre duquel un deuxième tronçon longitudinal de l'actionneur (5), rapporté à la longueur de l'actionneur (5) réalisé de manière longitudinale, est disposé à l'intérieur de l'espace libre (12), lequel deuxième tronçon est plus grand ou sensiblement plus grand que ledit premier tronçon longitudinal.

8. Système de soupape selon l'une des revendications 5 à 7, dans le cadre duquel l'élément de séparation (3) consiste en un soufflet métallique ou en une membrane.

9. Système de soupape selon l'une des revendications précédentes, dans le cadre duquel l'actionneur (5) présente un évidement qui s'étend dans la direction de l'axe longitudinal et à l'intérieur duquel est disposé l'élément chauffant (7).

10. Système de soupape selon l'une des revendications précédentes, dans le cadre duquel l'élément chauffant (7) est protégé par coupe-circuit à fusible thermique.

11. Système de soupape selon l'une des revendications précédentes, dans le cadre duquel l'axe longitudinal de l'actionneur (5) coïncide avec un axe longitudinal de l'entrée ou de la sortie.

12. Composant spatial pour une application spatiale, comprenant au moins un système de soupape selon l'une des revendications précédentes.
